Europäisches Patentamt

European Patent Office

Office européen des brevets

(11) Veröffentlichungsnummer: **0 339 540**

**A1**

(12) **EUROPÄISCHE PATENTANMELDUNG**

(21) Anmeldenummer: **89107363.7**

(22) Anmeldetag: **24.04.89**

(51) Int. Cl.4: **A23L 2/36**

(30) Priorität: **29.04.88 DE 3814572**

(43) Veröffentlichungstag der Anmeldung:
**02.11.89 Patentblatt 89/44**

(84) Benannte Vertragsstaaten:
**AT BE CH ES FR GB GR IT LI LU NL SE**

(71) Anmelder: **Möbus, Rainer**
**Färbergasse 11**
**D-8634 Rodach(DE)**

(72) Erfinder: **Möbus, Rainer**
**Färbergasse 11**
**D-8634 Rodach(DE)**

(54) **Verfahren zur Reduzierung des Kaliumgehaltes in Fruchtsäften,-Nektaren und-Getränken.**

(57) Im Bereich der Behandlung von Fruchtsäften hinsichtlich ihres Mineralgehaltes wurde bisher nur die totale Entmineralisierung oder die Zugabe bestimmter Mineralien praktiziert.

Für bestimmte Krankheiten wirkt sich der Genuß von Fruchtsäften negativ für die Kranken aus.

Manche Nierenkranke und Dialysepatienten dürfen nur sehr wenig Kalium zu sich nehmen.

Da in Fruchtsäften von Natur aus ein hoher Kaliumgehalt vorhanden ist, dürfen diese Patienten keine Fruchtsäfte trinken.

Dadurch kommen ihnen aber auch die physiologisch positiven Inhaltsstoffe der Fruchtsäfte nicht zugute.

Durch meine Erfindung ist es nun möglich, mittels eines calciumbeladenen Kationenaustauschers (Polystyrol mit Sulfongruppen vernetzt mit 8% Divinylbenzol), gezielt den Gehalt des Kaliums zu senken.

Bei Apfelsaft wurde bisher eine Senkung auf ca.30% des ursprünglichen Gehaltes erreicht.

EP 0 339 540 A1

## Verfahren zur Reduzierung des Kaliumgehaltes in Fruchtsäften,-Nektaren und -Getränken.

Die Erfindung betrifft die Behandlung von Fruchtsäften, -Nektaren und -Getränken.
Fruchtsäfte enthalten je nach Art der Frucht, aus denen sie gewonnen werden, eine bestimmte Zusammensetzung von Mineralstoffen, die ernährungsphysiologisch wertvoll sind.

Bisher wurden Ionenaustauscher hauptsächlich zur totalen Entmineralisierung und zur Entfärbung von Fruchtsäften und Fruchtsaftkonzentraten eingesetzt.

Verfahren zum gezielten Austausch bestimmter Ionen sind beispielsweise aus der FR-2210353, der GB-756854 und der EP-85295B1 bekannt, jedoch ist bisher noch nie Kalium gegen Calcium ausgetauscht worden.

Der Anmeldung liegt die Aufgabe zugrunde, ein kalium -armes Getränk zu schaffen.
Gelöst wird diese Aufgabe durch das, im Patentanspruch definierte Verfahren.

Bei dem Ionenaustauscher handelt es sich bervorzugt um einen calciumbeladenen Kationenaustauscher auf der Basis von Polystyrol mit Sulfongruppen vernetzt mit 8% Divinylbenzol.
Der Apfelsaft, der aus der Säule wieder austritt hat dann einen reduzierten Kaliumgehalt, der in der Regel nur noch 30% des Anfangsgehaltes beträgt.
Der Calciumgehalt ist entsprechend erhöht.

Erfindungsgemäß behandelte Fruchtsäfte können selbst -verständlich auch später, d.h. nach der Kalium -reduzierung, zu Nektaren und anderen Getränken weiterverarbeitet werden.

## Ansprüche

1. Verfahren zur Reduzierung des Kaliumgehaltes in Fruchtsäften,-Nektaren und -Getränken, indem diese durch einen Kationenaustauscher geleitet werden,
dadurch gekennzeichnet, daß ein calciumbeladener Ionenaustauscher eingesetzt wird.

2. Verfahren nach Anspruch 1, dadurch gekennzeichnet, daß ein Austauscher auf Basis von Polystyrol mit Sulfongruppen, das mit 8% Divinylbenzol vernetzt ist, eingesetzt wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-2 667 417 (G. DELMOUSEE et al.) <br> * Ansprüche 1,8 * <br> --- | 1,2 | A 23 L 2/36 |
| A | FR-A-2 304 674 (GENERFIN S.A.) <br> * Ansprüche 1,4 * <br> --- | 1 | |
| D,A | GB-A- 756 854 (PERMUTIT COMPANY LTD.) <br> * Ansprüche 1-3 * <br> ----- | 1 | |

RECHERCHIERTE SACHGEBIETE (Int. Cl.4)

A 23 L 2/00

Der vorliegende Recherchenbericht wurde für alle Patentansprüche erstellt

| Recherchenort | Abschlußdatum der Recherche | Prüfer |
|---|---|---|
| BERLIN | 17-07-1989 | SCHULTZE D |